# EUROPEAN PATENT SPECIFICATION

(11) **EP 3 689 647 B1**
(45) Date of publication and mention of the grant of the patent: **21.12.2022**
(21) Application number: 18863616.1
(22) Date of filing: 13.09.2018
(51) Int. Cl.: B60H 1/00, B60H 1/14

(54) **AUTOMOBILE THERMAL MANAGEMENT SYSTEM, AND AUTOMOBILE HAVING SAME**
WÄRMEMANAGEMENTSYSTEM FÜR KRAFTFAHRZEUGE UND KRAFTFAHRZEUG DAMIT
SYSTÈME DE GESTION THERMIQUE D'AUTOMOBILE ET AUTOMOBILE ÉQUIPÉE DE CELUI-CI

(30) Priority: 29.09.2017 CN 201710911875; 29.09.2017 CN 201721274154 U
(43) Date of publication of application: 05.08.2020
(73) Proprietor: Aiways Automobile (Shanghai) Co., Ltd, Jiading District Shanghai 201821 (CN)
(72) Inventor: GU, Feng, Shanghai 200090 (CN)
(74) Representative: RGTH
(86) International application number: PCT/CN2018/105536
(87) International publication number: WO 2019/062553

(56) References cited:
- EP-A2- 2 801 492
- EP-B1- 2 801 492
- CN-A- 101 633 306
- CN-A- 102 941 791
- CN-A- 105 984 304
- CN-A- 107 097 664
- CN-A- 107 521 307
- CN-U- 205 970 883
- DE-A1-102012 108 043
- US-A1- 2010 025 006
- US-B2- 9 731 576
- US-B2- 9 744 827

## Description

### TECHNICAL FIELD

The present invention belongs to the technical field of thermal management for pure electric vehicles, and relates to a management system, in particular to an automobile thermal management system and an automobile having the system.

### BACKGROUND

Document US 2010/025006 A discloses a known automobile thermal management system, comprising a passenger cabin cooling loop, a passenger cabin heating loop and a battery loop ; with a multi-path heat exchanger exchanging heat with the passenger cabin heating loop and the battery loop.

The thermal management system for pure electric vehicles is divided into a passenger cabin cooling system/passenger cabin heating system, a battery heating system/battery cooling system, a motor/MCU/OBC cooling system. A common solution in this field is: the passenger cabin cooling system uses air conditioner to perform cooling, the passenger cabin heating system uses a PTC to perform heating, the battery heating system uses a PTC to perform water heating, and the battery cooling system uses air conditioning cooling system; the motor/MCU/OBC cooling system uses a radiator to perform air cooling. This solution will need to use 2 PTCs and 2 heat exchangers, which will take up a lot of space and leads to a large cost increasing and is not conducive to increasing the cruising range of the whole vehicle. At the same time, this solution can only effectively increase the cruising range by making full use of heating of the motor body to heat the battery.

Therefore, how to provide an automobile thermal management system and an automobile having the system, so as to solve the defects that the existing automobile thermal management system needs more heat exchangers to realize the thermal management for vehicles, which leads to taking up of a lot of space in the vehicles and a large cost increasing and is not conducive to increasing the cruising range of the whole vehicle and the like, has become a technical problem to be solved by those skilled in the art.

### SUMMARY

In view of the above-mentioned shortcomings of the prior art, the purpose of the present invention is to provide an automobile thermal management system and an automobile having the system, to solve the problems that the existing automobile thermal management system needs more heat exchangers to realize the thermal management for vehicles, which leads to taking up of a lot of space in the vehicles and a large cost increasing and is not conducive to increasing the cruising range of the whole vehicle.

In order to achieve the above object and other related objects, the present invention provides an automobile thermal management system, including a passenger cabin cooling loop, a passenger cabin heating loop and a battery loop; wherein the passenger cabin cooling loop includes an electric compressor, a condenser and a heating and ventilation and air conditioning assembly in communication in turn and the heating and ventilation and air conditioning assembly is in communication with the electric compressor; the passenger cabin heating loop includes a heater, a first water pump and a first water valve and the heating and ventilation and air conditioning assembly shared with the passenger cabin cooling loop, which are in communication in turn, the heating and ventilation and air conditioning assembly is in communication with the heater, and the heater is configured to provide a heat source; the battery loop includes a heat exchanger, a second water pump, a power battery and a second water valve in communication in turn, and the second water valve is in communication with the heat exchanger; the automobile thermal management system further includes: a first battery heating loop, which is configured to utilize the heat source provided by the heater and perform heat exchange between water by means of the heat exchanger to heat the power battery in the battery loop; a second battery heating loop, which is configured to utilize the heat source generated by the driving motor within the automobile thermal management system and perform heat exchange between water by means of the heat exchanger to heat the power battery in the battery loop; a first battery cooling loop, which is configured to cool the power battery in the battery loop when the water temperature at the inlet of the power battery is sensed to be less than or equal to the predetermined temperature threshold; a second battery cooling loop, which is configured to utilize, when the water temperature at the inlet of the power battery is sensed to be greater than the predetermined temperature threshold, condensing agent provided by the condenser in the passenger cabin cooling loop to perform heat exchange between water and the condensing agent by means of the heat exchanger in communication with the passenger cabin cooling loop and shared with the battery loops, so as to cool the power battery in the battery loop.

In an embodiment of the present invention, the first battery heating loop includes a fourth water valve, the heater, the first water pump and the first water valve shared with the passenger cabin heating loop and the heat exchanger shared with the battery loop in communication in turn, and the heat exchanger is in communication with the fourth water valve; wherein according to the need to heat the passenger cabin by using the passenger cabin heating loop, the first water valve directs the water flow to the heating and ventilation and air conditioning assembly, to perform wind and heat exchange between the heat source generated by the heater and the warm wind core in the heating and ventilation and air conditioning assembly; according to the need to heat the power battery by using the first battery heating loop, the fourth water valve operates to guide the water flow to the heater shared with the passenger cabin heating loop, and the first water valve guides the water flow the heat exchanger, to heat the power battery via the heat exchanger shared with the battery loop.

In an embodiment of the present invention, the automobile thermal management system further includes a motor heat dissipation loop; the motor heat dissipation loop is configured to cool the driving motor within the automobile thermal management system, and an on-board charger is in communication with the microcontroller; the motor heat dissipation loop includes a microcontroller, a driving motor, a third water pump, a third water valve, a first expansion tank, a motor radiator, a water temperature sensor and the on-board charger in communication in turn; when the water temperature sensor senses that the temperature of the heat generated by the driving motor exceeds a predetermined motor temperature threshold, the microcontroller controls the third water valve to guide the water flow to the first expansion tank, to remove the heat generated by the driving motor via the first expansion tank and the motor radiator.

In an embodiment of the present invention, the second battery heating loop includes the heat exchanger shared with the battery loop, a fourth water valve, the on-board charger, the microcontroller, the driving motor, the third water pump and the third water valve shared with the motor heat dissipation loop in communication in turn; the third water valve is in communication with the heat exchanger; according to the need to heat the power battery by using the second battery heating loop, the third water valve guides the water flow to the heat exchanger, and the heat generated by the driving motor passes through the heat exchanger shared with the battery loop to perform heat exchange between water, to heat the power battery in the battery loop.

In an embodiment of the present invention, the first battery cooling loop includes the second water pump, the power battery and the second water valve shared with battery loop, a second expansion tank and a battery radiator in communication in turn; the battery radiator is in communication with the second water pump; when the temperature sensor provided on the power battery senses that the water temperature at the inlet thereof is less than or equal to the predetermined temperature threshold, the controller of the automobile thermal management system controls the operation of the second water valve to guide the water flow to the second expansion tank, and the heat dissipated by the power battery will be removed through the cooling plate of the power battery, the second water pump and the battery radiator.

In an embodiment of the present invention, the second battery cooling loop is a loop formed by communicating the passenger cabin cooling loop with the battery loop; when the temperature sensor provided on the power battery senses that the water temperature at the inlet thereof is larger than the predetermined temperature threshold, the controller of the automobile thermal management system controls the operation of the second water valve to guide the water flow to the heat exchanger in communication with the passenger cabin cooling loop, and at the same time the controller turns on the electric compressor of the passenger cabin cooling loop to perform heat exchange between condensing agent and water by means of the heat exchanger by using the condensing agent provided by the condenser, so as to remove the heat dissipated by the power battery.

In an embodiment of the present invention, an integrated three-path heat exchanger is utilized as the heat exchanger.

In an embodiment of the present invention, a ceramic electric heater is utilized as the heater.

Another aspect of the present invention provides an automobile, which includes the automobile thermal management system.

As described above, the automobile thermal management system and the automobile having the system of the present invention have the following beneficial effect:
First, the motor/MCU/OBC cooling system of the present invention is a separate closed system and the control is simple.
Second, passenger cabin heating and battery heating share one PTC heating. Compared with the two PTCs used more commonly, it has a greater advantage in heating cost. Basically there is no need to modify the platformized HVAC host, which saves development cycle.
Third, battery cooling and battery heating utilize an integrated three-path heat exchanger. Compared with the two plate heat exchangers used more commonly, it has a greater advantage in cost, and can save a large installation space and related pipelines.
Fourth, the battery cooling loop of the present invention utilizes two intelligent modes of direct cooling by battery radiator and forced cooling by air conditioning cooling, which saves battery power and increases cruising range.
Fifth, the heat of the motor of the present invention during the operation can be limitedly used to heat the battery, which save battery power and increase the cruising range.

### BRIEF DESCRIPTION OF THE DRAWINGS

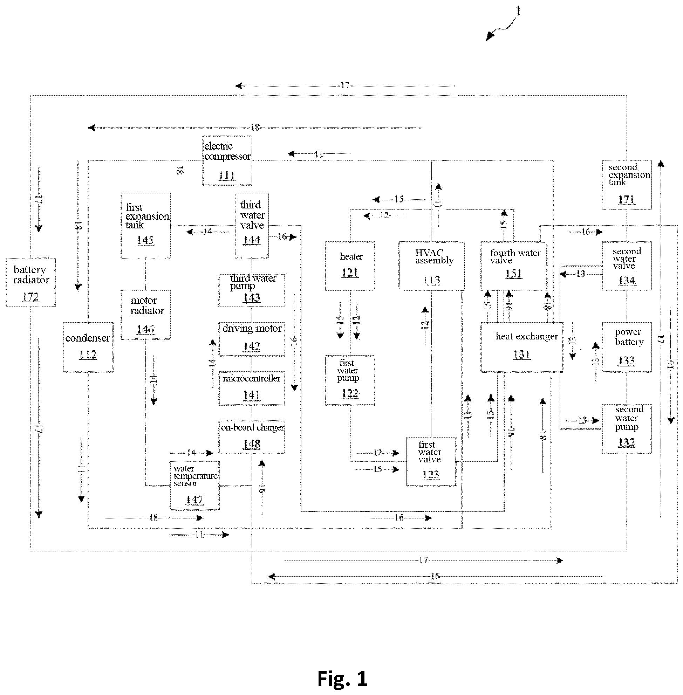

Figure 1 shows a schematic diagram of the principle structure of an automobile thermal management system in an embodiment of the present invention.

### DESCRIPTION OF REFERENCE NUMERALS

- 1: automobile thermal management system
- 11: passenger cabin cooling loop
- 12: passenger cabin heating loop
- 13: battery loop
- 14: motor heat dissipation loop
- 15: first battery heating loop
- 16: second battery heating loop
- 17: first battery cooling loop
- 18: second battery cooling loop
- 111: electric compressor
- 112: condenser
- 113: heating and ventilation and air conditioning assembly
- 121: heater
- 122: first water pump
- 123: first water valve
- 131: heat exchanger
- 132: second water pump
- 133: power battery
- 134: second water valve
- 141: microcontroller
- 142: driving motor
- 143: third water pump
- 144: third water valve
- 145: first expansion tank
- 146: motor radiator
- 147: water temperature sensor
- 148: on-board charger
- 151: fourth water valve
- 171: second expansion tank
- 172: battery radiator

### DETAILED DESCRIPTION

In the following, the implementation of the present invention will be described by specific concrete embodiments, and those skilled in the art can easily understand other advantages and effects of the present invention from the contents disclosed in the present description.

Please refer to Figure 1. It should be noted that the structure, proportion, size, etc. shown in the drawings of the present description are only used to match the contents disclosed in the description, for those skilled in the art to understand and read, not used to limit defining conditions on which the present invention can be implemented, and thus do not have a technically significant meaning. Any modification of the structure, change in the proportional relationship or adjustment of the size, without affecting the effectiveness, which can be generated by the present invention, and the purpose, which can be achieved by the present invention, all should still fall into the scopes, which can be covered by the technical contents disclosed by the present invention. In the meantime, the terms such as "a" and "one" cited in the present description are also only used to facilitate the understanding of the description and not used to define the scopes, which can be implemented by the present invention, and the change or adjustment of the relative relationship of which, without substantial changes in the technical contents, should also be regarded as the scopes, which can be implemented by the present invention.

### EMBODIMENT 1

The present embodiment provides an automobile thermal management system, comprising a passenger cabin cooling loop, a passenger cabin heating loop and a battery loop; wherein the passenger cabin cooling loop comprises an electric compressor, a condenser and a heating and ventilation and air conditioning assembly in communication in turn and the heating and ventilation and air conditioning assembly is in communication with the electric compressor; the passenger cabin heating loop comprises a heater, a first water pump and a first water valve and the heating and ventilation and air conditioning assembly shared with the passenger cabin cooling loop, which are in communication in turn, the heating and ventilation and air conditioning assembly is in communication with the heater, and the heater is configured to provide a heat source; the battery loop comprises a heat exchanger, a second water pump, a power battery and a second water valve in communication in turn, and the second water valve is in communication with the heat exchanger; the automobile thermal management system further comprises:
a first battery heating loop, which is configured to utilize the heat source provided by the heater and perform heat exchange between water by means of the heat exchanger to heat the power battery in the battery loop;
a second battery heating loop, which is configured to utilize the heat source generated by the driving motor and perform heat exchange between water by means of the heat exchanger to heat the power battery in the battery loop;
a first battery cooling loop, which is configured to cool the power battery in the battery loop when the temperature on the power battery is sensed to be less than or equal to the predetermined temperature threshold;
a second battery cooling loop, which is configured to utilize, when the temperature on the power battery is sensed to be greater than the predetermined temperature threshold, condensing agent provided by the condenser in the passenger cabin cooling loop to perform heat exchange between water and the condensing agent by means of the heat exchanger in communication with the passenger cabin cooling loop, so as to cool the power battery in the battery loop.

The automobile thermal management system provided in the present embodiment will be described in detail below with reference to the drawings. Please refer to Figure 1, which shows a schematic diagram of the principle structure of an automobile thermal management system in an embodiment. As shown in Figure 1, the automobile thermal management system 1 includes a passenger cabin cooling loop 11, a passenger cabin heating loop 12, a battery loop 13, a motor heat dissipation loop 14, a first battery heating loop 15, a second battery heating loop 16, a first battery cooling loop 17, a second battery cooling loop 18 and a controller for controlling all the above loops (not shown). The passenger cabin heating loop and the first battery heating loop of the automobile thermal management system of the present embodiment shares one PTC. The first battery cooling loop is directly cooled by a radiator and the second battery cooling loop is cooled by air conditioning cooling and be controlled intelligently. The second battery heating loop and the second battery cooling loop share one heat exchanger. In Figure 1, the different loops are indicated by the directions of arrows and reference numerals.

Referring to Figure 1, the passenger cabin cooling loop 11 is represented by a loop formed by the arrows indicated with numeral 11. The passenger cabin cooling loop 11 is configured to cool the passenger cabin of the automobile. As shown in Figure 1, the passenger cabin cooling loop 11 includes an electric compressor 111, a condenser 112 and a heating and ventilation and air conditioning assembly 113 (an HVAC assembly, which includes an evaporator, a heater core, a blower fan, an air filter, etc.) in communication in turn. The heating and ventilation and air conditioning assembly 113 is in communication with the electric compressor 111. The electric compressor 111, the condenser 112 and the heating and ventilation and air conditioning assembly 113 are connected via an air conditioning duct to form an air conditioning system for cooling the passenger cabin.

Referring to Figure 1, the passenger cabin heating loop 12 is represented by a loop formed by the arrows indicated with numeral 12. The passenger cabin heating loop 12 is configured to heat the passenger cabin of the automobile. As shown in Figure 1, the passenger cabin heating loop 12 includes a heater 121, a first water pump 122 and a first water valve 123 (the first water valve 123 is a three-way water valve) in communication in turn and the heating and ventilation and air conditioning assembly 113 shared with the passenger cabin cooling loop. The heating and ventilation and air conditioning assembly 113 is in communication with the heater 121. Among them, the heater 121 is configured to provide a heat source. In the present embodiment, a ceramic electric heater PTC is used as the heater 121. When the operator chooses to heat the passenger cabin, the controller turns on the PTC to raise the heat source, and the controller controls the operation of the first water pump 122 to guide the heat-absorbing water flow to the heating ventilation and air conditioning assembly 113, to perform heat exchange with the wind therein.

Referring to Figure 1, the battery loop 13 is represented by a loop formed by the arrows indicated with numeral 13. As shown in Figure 1, the battery loop 13 includes a heat exchanger 131, a second water pump 132, a power battery 133 and a second water valve 134 (the second water valve is a three-way water valve), etc. in communication in turn. The second water valve 134 is in communication with the heat exchanger 131. In the present embodiment, because the power battery 133 can discharge electric energy only when a certain temperature value is exceeded, it is necessary to maintain the temperature of the environment in which the power battery 133 is located. In the present embodiment, an integrated three-path heat exchanger is used as the heat exchanger 131. In other words, there is a heat exchanger having three loops inside the integrated three-path heat exchanger, wherein one is the closed battery loop 13 formed by the power battery 133, another is connected with the heat source from the heater 121 in the first battery heating loop 15 to heat the power battery 133, and a further one is connected with the coolant from the condenser 112 in the passenger cabin cooling loop 11 to cool the power battery 133. Compared with the two plate heat exchangers used more commonly, it has a greater advantage in cost, and the integrated three-path heat exchangers in the present embodiment can save a large installation space and related pipelines.

Referring to Figure 1, the motor heat dissipation loop 14 is represented by a loop formed by the arrows indicated with numeral 14. As shown in Figure 1, the motor heat dissipation loop 14 includes a microcontroller 141 (MCU), a driving motor 142, a third water pump 143, a third water valve 144 (the third water valve is a three-way water valve), a first expansion tank 145, a motor radiator 146, a water temperature sensor 147 and an on-board charger 148 (OBC) etc. in communication in turn. The on-board charger 148 is in communication with the microcontroller 141. In the present embodiment, when the water temperature sensor 147 senses that the temperature of the heat generated by the driving motor 142 exceeds a predetermined motor temperature threshold, the microcontroller 141 controls the third water valve 144 to guide the water flow, which absorbs the heat generated by the driving motor 142, to the first expansion tank 145, to remove the heat generated by the driving motor 142 through the coolant in the first expansion tank 145 and the motor radiator 146. In the present embodiment, the motor heat dissipation circuit 14 is a separate closed loop and the control is simple.

Referring to Figure 1, the first battery heating loop 15 is represented by a loop formed by the arrows indicated with numeral 15. As shown in Figure 1, the first battery heating loop 15 includes a fourth water valve 151 (the fourth water valve is a three-way water valve), the heater 121, the first water pump 122 and the first water valve 123 shared with the passenger cabin heating loop and the heat exchanger 131 shared with the battery loop in communication in turn. The heat exchanger 131 is in communication with the fourth water valve 151. The first battery heating loop 15 utilizes the heat source provided by the heater 121 and performs heat exchange between water by means of the heat exchanger 131 to heat the power battery in the battery loop.

Specifically, according to the need to heat the passenger cabin by using the passenger cabin heating loop 12, the first water valve 123 directs the water flow to the heating and ventilation and air conditioning assembly 113, to perform wind and heat exchange between the heat source generated by the heater 121 and the warm wind core in the heating and ventilation and air conditioning assembly 113.

According to the need to heat the power battery 133 by using the first battery heating loop 15, the fourth water valve 151 operates to guide the water flow to the heater 121 shared with the passenger cabin heating loop, and the first water valve 123 guides the water flow the heat exchanger 131, to heat the power battery 133 via the heat exchanger 131 shared with the battery loop 13. In the present embodiment, the passenger cabin heating loop 12 and the first battery heating loop 15 share one PTC to perform heating. Compared with the two PTCs used more commonly, it has a greater advantage in heating cost. Basically there is no need to modify the platformized HVAC host, which saves development cycle.

Referring to Figure 1, the second battery heating loop 16 is represented by a loop formed by the arrows indicated with numeral 16. As shown in Figure 1, the second battery heating loop 16 includes the heat exchanger 131 shared with the battery loop 13, a fourth water valve 151, the on-board charger 148, the microcontroller 141, the driving motor 142, the third water pump 143 and the third water valve 144 shared with the motor heat dissipation loop 14 in communication in turn. The third water valve 144 is in communication with the heat exchanger 131. The second battery heating loop 16 utilizes the heat source generated by the driving motor 142 and performs heat exchange between water by means of the heat exchanger 131 to heat the power battery in the battery loop.

Specifically, according to the need to heat the power battery 133 by using the second battery heating loop 16, the third water valve 144 guides the water flow to the heat exchanger 131 shared with the battery loop, and the heat generated by the driving motor passes through the heat exchanger to perform heat exchange between water, to heat the power battery 133 in the battery loop 13.

Referring to Figure 1, the first battery cooling loop 17 is represented by a loop formed by the arrows indicated with numeral 17. In the present embodiment, the first battery cooling loop 17 includes the second water pump 132, the power battery 133 and the second water valve 134 shared with battery loop 13, a second expansion tank 171 and a battery radiator 172 in communication in turn. The battery radiator 172 is in communication with the second water pump 132. The first battery cooling loop 17 is configured to cool the power battery in the battery loop when the water temperature at the inlet of the power battery is sensed to be less than or equal to a predetermined temperature threshold

Specifically, when the temperature sensor provided on the power battery 133 senses that the water temperature at the inlet of the power battery is less than or equal to the predetermined temperature threshold, the controller of the automobile thermal management system controls the operation of the second water valve 134 to guide the water flow to the second expansion tank 171, and the heat dissipated by the power battery will be removed via the cooling plate of the power battery 133, the second water pump 132 and the battery radiator 172.

Referring to Figure 1, the second battery cooling loop 18 is represented by a loop formed by the arrows indicated with numeral 18. The second battery cooling loop 18 is the passenger cabin cooling loop 11 plus the battery loop 13. The second battery cooling loop 18 utilizes, when the water temperature at the inlet of the power battery is sensed to be greater than the predetermined temperature threshold, the coolant provided by the condenser in the passenger cabin cooling loop to perform heat exchange between water and the coolant by means of the heat exchanger in communication with the passenger cabin cooling loop and shared with the battery loop, to cool the power battery in the battery loop.

When the temperature sensor provided on the power battery senses that the water temperature at the inlet of the power battery is larger than the predetermined temperature threshold, the controller of the automobile thermal management system controls the operation of the second water valve 134 to guide the water flow to the heat exchanger 131 in communication with the passenger cabin cooling loop 11, and at the same time the controller turns on the electric compressor 111 of the passenger cabin cooling loop 11 to perform heat exchange between condensing agent and water by means of the heat exchanger 131 by using the condensing agent provided by the condenser 112, so as to remove the heat dissipated by the power battery. In the present embodiment, the first battery heating loop 15, the second battery heating loop 16 and the second battery cooling loop 18 share one heat exchanger 131, which effectively uses the heat of the driving motor 142 during operation and can effectively reduce the cost and save the power consumption of the heat pipe system.

The present embodiment further provides an automobile, which has the above described automobile thermal management system.

To sum up, the automobile thermal management system and the automobile having the system of the present invention have the following beneficial effect:
First, the motor/MCU/OBC cooling system of the present invention is a separate closed system and the control is simple.
Second, passenger cabin heating and battery heating share one PTC heating. Compared with the two PTCs used more commonly, it has a greater advantage in heating cost. Basically there is no need to modify the platformized HVAC host, which saves development cycle.
Third, battery cooling and battery heating utilize an integrated three-path heat exchanger. Compared with the two plate heat exchangers used more commonly, it has a greater advantage in cost, and can save a large installation space and related pipelines.
Fourth, the battery cooling loop of the present invention utilizes two intelligent modes of direct cooling by battery radiator and forced cooling by air conditioning cooling, which saves battery power and increases cruising range.
Fifth, the heat of the motor of the present invention during the operation can be limitedly used to heat the battery, which save battery power and increase the cruising range. Therefore, the present invention effectively overcomes various shortcomings in the prior art and has high industrial utilization value.

## Claims

1. An automobile thermal management system (1), comprising a passenger cabin cooling loop (11), a passenger cabin heating loop (12) and a battery loop (13); wherein the passenger cabin cooling loop (11) comprises an electric compressor (111), a condenser (112) and a heating and ventilation and air conditioning assembly (113) in communication in turn, and the heating and ventilation and air conditioning assembly (113) is in communication with the electric compressor (111); the passenger cabin heating loop (12) comprises a heater (121), a first water pump (122), a first water valve (123) and the heating and ventilation and air conditioning assembly (113) shared with the passenger cabin cooling loop (11) which are in communication in turn, the heating and ventilation and air conditioning assembly (113) is in communication with the heater (121), and the heater (121) is configured to provide a heat source; the battery loop (13) comprises a heat exchanger (131), a second water pump (132), a power battery (133) and a second water valve (134) in communication in turn, and the second water valve (134) is in communication with the heat exchanger (131), **characterized in that** the automobile thermal management system (1) further comprises:
a first battery heating loop (15), which is configured to utilize the heat source provided by the heater (121) and perform heat exchange between water by means of the heat exchanger (131), to heat the power battery (133) in the battery loop (13);
a second battery heating loop (16), which is configured to utilize the heat source generated by a driving motor (142) within the automobile thermal management system (1) and perform heat exchange between water by means of the heat exchanger (131), to heat the power battery (133) in the battery loop (13);
a first battery cooling loop (17), which is configured to cool the power battery (133) in the battery loop (13) when the water temperature at the inlet of the power battery (133) is sensed to be less than or equal to the predetermined temperature threshold;
a second battery cooling loop (18), which is configured to utilize, when the water temperature at the inlet of the power battery (133) is sensed to be greater than the predetermined temperature threshold, condensing agent provided by the condenser (112) in the passenger cabin cooling loop (11) to perform heat exchange between water and the condensing agent by means of the heat exchanger (131) in communication with the passenger cabin cooling loop (11) and shared with the battery loops (13), so as to cool the power battery (133) in the battery loop (13);
wherein the first battery heating loop (15) comprises a fourth water valve (151), the heater (121), the first water pump (122), the first water valve (123) and the heat exchanger (131) which are in communication in turn, the heater (121), the first water pump (122) and the first water valve (123) being shared with the passenger cabin heating loop (12), and the heat exchanger (131) being shared with the battery loop (13), and the heat exchanger (131) is in communication with the fourth water valve (151);
wherein according to the need to heat the passenger cabin by the passenger cabin heating loop (12), the first water valve (123) directs a water flow to the heating and ventilation and air conditioning assembly (113), to perform wind and heat exchange between the heat source generated by the heater (121) and the warm wind core in the heating and ventilation and air conditioning assembly (113);
according to the need to heat the power battery (133) by the first battery heating loop (15), the fourth water valve (151) guides the water flow to the heater (121) shared with the passenger cabin heating loop (12), and the first water valve (123) guides the water flow the heat exchanger (131), to heat the power battery (133) via the heat exchanger (131) shared with the battery loop (13).

2. The automobile thermal management system (1) according to claim 1, **characterized in that** the automobile thermal management system (1) further comprises a motor heat dissipation loop (14); the motor heat dissipation loop (14) is configured to cool the driving motor (142) within the automobile thermal management system (1); the motor heat dissipation loop (14) comprises a microcontroller (141), the driving motor (142), a third water pump (143), a third water valve (144), a first expansion tank (145), a motor radiator (146), a water temperature sensor (147) and an on-board charger (148) in communication in turn, and the on-board charger (148) is in communication with the microcontroller (141); when the water temperature sensor (147) senses that the temperature of the heat generated by the driving motor (142) exceeds a predetermined motor temperature threshold, the microcontroller (141) controls the third water valve (144) to guide the water flow to the first expansion tank (145), to remove the heat generated by the driving motor (142) via the first expansion tank (145) and the motor radiator (146).

3. The automobile thermal management system (1) according to claim 2, **characterized in that**: the second battery heating loop (16) comprises the heat exchanger (131) shared with the battery loop (13), a fourth water valve (151), the on-board charger (148), the microcontroller (141), the driving motor (142), the third water pump (143) and the third water valve (144) shared with the motor heat dissipation loop (14) in communication in turn; the third water valve (144) is in communication with the heat exchanger (131);
according to the need to heat the power battery (133) by the second battery heating loop (16), the third water valve (144) guides the water flow to the heat exchanger (131), and the heat generated by the driving motor (142) passes through the heat exchanger (131) shared with the battery loop (13) to perform heat exchange between water, to heat the power battery (133) in the battery loop (13).

4. The automobile thermal management system (1) according to claim 1, **characterized in that** the first battery cooling loop (13) comprises the second water pump (132), the power battery (133) and the second water valve (134) shared with battery loop (13), a second expansion tank (171), and a battery radiator (172) in communication in turn; the battery radiator (172) is in communication with the second water pump (132);
when the temperature sensor provided on the power battery (133) senses that the water temperature at the inlet of the power battery (133) is less than or equal to the predetermined temperature threshold, the controller of the automobile thermal management system (1) controls the operation of the second water valve (134) to guide the water flow to the second expansion tank (171), and the heat dissipated by the power battery (133) will be removed through the cooling plate of the power battery (133), the second water pump (132) and the battery radiator (172).

5. The automobile thermal management system (1) according to claim 1, **characterized in that** the second battery cooling loop (18) is a loop formed by communicating the passenger cabin cooling loop (11) with the battery loop (13); when the temperature sensor provided on the power battery (133) senses that the water temperature at the inlet of the power battery (133) is larger than the predetermined temperature threshold, the controller of the automobile thermal management system (1) controls the operation of the second water valve (134) to guide the water flow to the heat exchanger (131) in communication with the passenger cabin cooling loop (11), and at the same time the controller turns on the electric compressor (111) of the passenger cabin cooling loop (11) to perform heat exchange between condensing agent and water via the heat exchanger (131) by the condensing agent provided by the condenser (112), so as to remove the heat dissipated by the power battery (133).

6. The automobile thermal management system (1) according to claim 1, **characterized in that** an integrated three-path heat exchanger is utilized as the heat exchanger (131).

7. The automobile thermal management system (1) according to claim 1, **characterized in that** a ceramic electric heater is utilized as the heater (121).

8. An automobile, **characterized by** comprising an automobile thermal management system (1) according to any of claims 1-7.

## Patentansprüche

1. Fahrzeugwärmemanagementsystem (1), umfassend einen Fahrgastkabinenkühlkreislauf (11), einen Fahrgastkabinenheizkreislauf (12) und einen Batteriekreislauf (13); wobei der Fahrgastkabinenkühlkreislauf (11) einen elektrischen Kompressor (111), einen Kondensator (112) und eine Heiz- und Belüftungs- und Klimaanlagenanordnung (113) umfasst, die wiederum in Verbindung stehen, und die Heiz- und Belüftungs- und Klimaanlagenanordnung (113) mit dem elektrischen Kompressor (111) in Verbindung steht; der Fahrgastkabinenheizkreislauf (12) eine Heizung (121), eine erste Wasserpumpe (122), ein erstes Wasserventil (123) und die mit dem Fahrgastkabinenkühlkreislauf (11) geteilte Heiz- und Belüftungs- und Klimaanlagenanordnung (113) umfasst, die wiederum in Verbindung stehen, die Heiz- und Belüftungs- und Klimaanlagenanordnung (113) mit der Heizung (121) in Verbindung steht, und die Heizung (121) so konfiguriert ist, dass sie eine Wärmequelle bereitstellt; der Batteriekreislauf (13) einen Wärmetauscher (131), eine zweite Wasserpumpe (132), eine Leistungsbatterie (133) und ein zweites Wasserventil (134) umfasst, die wiederum in Verbindung stehen, und das zweite Wasserventil (134) mit dem Wärmetauscher (131) in Verbindung steht, **dadurch gekennzeichnet, dass** das Fahrzeugwärmemanagementsystem (1) ferner Folgendes umfasst:
einen ersten Batterieheizkreiskauf (15), der so konfiguriert ist, dass er die von der Heizung (121) bereitgestellte Wärmequelle nutzt und einen Wärmeaustausch zwischen Wasser mittels des Wärmetauschers (131) durchführt, um die Leistungsbatterie (133) in dem Batteriekreislauf (13) zu erwärmen;
einen zweiten Batterieheizkreislauf (16), der so konfiguriert ist, dass er die durch einen Antriebsmotor (142) in dem Fahrzeugwärmemanagementsystem (1) erzeugte Wärmequelle nutzt und einen Wärmeaustausch zwischen Wasser mittels des Wärmetauschers (131) durchführt, um die Leistungsbatterie (133) in dem Batteriekreislauf (13) zu erwärmen;
einen ersten Batteriekühlkreislauf (17), der so konfiguriert ist, dass er die Leistungsbatterie (133) in dem Batteriekreislauf (13) kühlt, wenn erfasst wird,
dass die Wassertemperatur an dem Einlass der Leistungsbatterie (133) geringer oder gleich dem vorbestimmten Temperaturschwellenwert ist;
einen zweiten Batteriekühlkreislauf (18), der so konfiguriert ist, dass er, wenn erfasst wird, dass die Wassertemperatur am Einlass der Leistungsbatterie (133) höher als der vorbestimmte Temperaturschwellenwert ist, von dem Kondensator (112) in dem Fahrgastkabinenkühlkreislauf (11) bereitgestelltes Kondensationsmittel verwendet, um einen Wärmeaustausch zwischen Wasser und dem Kondensationsmittel mittels des Wärmetauschers (131) in Verbindung mit dem Fahrgastkabinenkühlkreislauf (11) und geteilt mit den Batteriekreisläufen (13) durchführt, um die Leistungsbatterie (133) in dem Batteriekreislauf (13) zu kühlen;
wobei der erste Batterieheizkreislauf (15) ein viertes Wasserventil (151), die Heizung (121), die erste Wasserpumpe (122), das erste Wasserventil (123) und den Wärmetauscher (131) umfasst, die wiederum in Verbindung stehen, wobei die Heizung (121), die erste Wasserpumpe (122) und das erste Wasserventil (123) mit dem Fahrgastkabinenheizkreislauf (12) geteilt werden und der Wärmetauscher (131) mit dem Batteriekreislauf (13) geteilt wird, und der Wärmetauscher (131) mit dem vierten Wasserventil (151) in Verbindung steht;
wobei das erste Wasserventil (123) je nach Notwendigkeit, die Fahrgastkabine durch den Fahrgastkabinenheizkreislauf (12) zu erwärmen, einen Wasserfluss zu der Heiz- und Belüftungs- und Klimatisierungsanordnung (113) leitet, um einen Wind- und Wärmeaustausch zwischen der durch die Heizung (121) erzeugten Wärmequelle und dem warmen Windkern in der Heiz- und Belüftungs- und Klimatisierungsanordnung (113) durchzuführen;
je nach Notwendigkeit, die Leistungsbatterie (133) durch den ersten Batterieheizkreislauf (15) zu erwärmen, das vierte Wasserventil (151) den Wasserfluss zu der mit dem Fahrgastkabinenheizkreislauf (12) geteilten Heizung (121) leitet, und das erste Wasserventil (123) den Wasserfluss zu dem Wärmetauscher (131) führt, um die Leistungsbatterie (133) über den mit dem Batteriekreislauf (13) geteilten Wärmetauscher (131) zu erwärmen.

2. Fahrzeugwärmemanagementsystem (1) gemäß Anspruch 1, **dadurch gekennzeichnet, dass** das Fahrzeugwärmemanagementsystem (1) ferner einen Motorwärmeableitungskreislauf (14) umfasst; der Motorwärmeableitungskreislauf (14) so konfiguriert ist, dass er den Antriebsmotor (142) innerhalb des Fahrzeugwärmemanagementsystems (1) kühlt; der Motorwärmeableitungskreislauf (14) einen Mikrocontroller (141), den Antriebsmotor (142), eine dritte Wasserpumpe (143), ein drittes Wasserventil (144), einen ersten Expansionstank (145), einen Motorradiator (146), einen Wassertemperatursensor (147) und ein On-Board-Ladegerät (148) umfasst, die wiederum in Verbindung stehen, und das On-Board-Ladegerät (148) mit dem Mikrocontroller (141) in Verbindung steht; wenn der Wassertemperatursensor (147) erfasst, dass die Temperatur der durch den Antriebsmotor (142) erzeugten Wärme einen vorbestimmten Motortemperaturschwellenwert überschreitet, der Mikrocontroller (141) das dritte Wasserventil (144) steuert, um den Wasserfluss zu dem ersten Expansionstank (145) zu leiten, um die durch den Antriebsmotor (142) erzeugte Wärme über den ersten Expansionstank (145) und den Motorradiator (146) zu entfernen.

3. Fahrzeugwärmemanagementsystem (1) gemäß Anspruch 2, **dadurch gekennzeichnet, dass**: der zweite Batterieheizkreislauf (16) den mit dem Batteriekreislauf geteilten Wärmetauscher (131), ein viertes Wasserventil (151), das On-Board-Ladegerät (148), den Mikrocontroller (141), den Antriebsmotor (142), die dritte Wasserpumpe (143) und das mit dem Motorwärmeableitungskreislauf (14) geteilte dritte Wasserventil (144) umfasst, die wiederum in Verbindung stehen; das dritte Wasserventil (144) mit dem Wärmetauscher (131) in Verbindung steht;
je nach Notwendigkeit, die Leistungsbatterie (133) durch den zweiten Batterieheizkreislauf (16) zu erwärmen, das dritte Wasserventil (144) den Wasserfluss zu dem Wärmetauscher (131) leitet und die durch den Antriebsmotor (142) erzeugte Wärme durch den mit dem Batteriekreislauf (13) geteilten Wärmetauscher (131) leitet, um einen Wärmeaustausch zwischen Wasser durchzuführen, um die Leistungsbatterie (133) in dem Batteriekreislauf (13) zu erwärmen.

4. Fahrzeugwärmemanagementsystem (1) gemäß Anspruch 1, **dadurch gekennzeichnet, dass** der erste Batteriekühlkreislauf (13) die zweite Wasserpumpe (132), die Leistungsbatterie (133) und das mit dem Batteriekreislauf (13) geteilte zweite Wasserventil (134), einen zweiten Expansionstank (171) und einen Batterieradiator (172) umfasst, die wiederum in Verbindung stehen; der Batterieradiator (172) mit der zweiten Wasserpumpe (132) in Verbindung steht;
wenn der an der Leistungsbatterie (133) vorgesehene Temperatursensor erfasst, dass die Wassertemperatur an dem Einlass der Leistungsbatterie (133) kleiner oder gleich dem vorbestimmten Temperaturschwellenwert ist, die Steuerung des Fahrzeugwärmemanagementsystems (1) den Betrieb des zweiten Wasserventils (134) steuert, um den Wasserfluss zu dem zweiten Expansionstank (171) zu führen, und die durch die Leistungsbatterie (133) abgeführte Wärme durch die Kühlplatte der Leistungsbatterie (133), die zweite Wasserpumpe (132) und den Batterieradiator (172) entfernt wird.

5. Fahrzeugwärmemanagementsystem (1) gemäß Anspruch 1, **dadurch gekennzeichnet, dass** der zweite Batteriekühlkreislauf (18) ein Kreislauf ist, der durch Verbinden des Fahrgastkabinenkühlkreislaufs (11) mit dem Batteriekreislauf (13) ausgebildet ist;
wenn der an der Leistungsbatterie (133) vorgesehene Temperatursensor erfasst, dass die Wassertemperatur an dem Einlass der Leistungsbatterie (133) höher als der vorbestimmte Temperaturschwellenwert ist, die Steuerung des Fahrzeugwärmemanagementsystems (1) den Betrieb des zweiten Wasserventils (134) steuert, um den Wasserfluss zu dem Wärmetauscher (131) in Verbindung mit dem Fahrgastkabinenkühlkreislauf (11) zu leiten, und gleichzeitig die Steuerung den elektrischen Kompressor (111) des Fahrgastkabinenkühlkreislaufs (11) einschaltet, um einen Wärmeaustausch zwischen Kondensationsmittel und Wasser über den Wärmetauscher (131) durch das durch den Kondensator (112) vorgesehene Kondensationsmittel durchzuführen, um die durch die Leistungsbatterie (133) abgeführte Wärme zu entfernen.

6. Fahrzeugwärmemanagementsystem (1) gemäß Anspruch 1, **dadurch gekennzeichnet, dass** als Wärmetauscher (131) ein integrierter Drei-Wege-Wärmetauscher verwendet wird.

7. Fahrzeugwärmemanagementsystem (1) gemäß Anspruch 1, **dadurch gekennzeichnet, dass** als Heizung (121) eine keramische elektrische Heizung verwendet wird.

8. Fahrzeug, **dadurch gekennzeichnet, dass** es ein Fahrzeugwärmemanagementsystem (1) gemäß einem der Ansprüche 1-7 umfasst.

## Revendications

1. Système de gestion thermique d'automobile (1), comprenant une boucle de refroidissement d'habitacle (11), une boucle de chauffage d'habitacle (12) et une boucle de batterie (13) ; dans lequel la boucle de refroidissement d'habitacle (11) comprend un compresseur électrique (111), un condenseur (112) et un ensemble de chauffage et de ventilation et de climatisation (113) en communication à tour de rôle, et l'ensemble de chauffage et de ventilation et de climatisation (113) est en communication avec le compresseur électrique (111); la boucle de chauffage d'habitacle (12) comprend un réchauffeur (121), une première pompe à eau (122), une première vanne d'eau (123) et l'ensemble de chauffage et ventilation et climatisation (113) partagé avec la boucle de refroidissement d'habitacle (11) qui sont en communication à tour de rôle, l'ensemble de chauffage et de ventilation et de climatisation (113) est en communication avec le réchauffeur (121), et le réchauffeur (121) est configuré pour fournir une source de chaleur ; la boucle de batterie (13) comprend un échangeur de chaleur (131), une deuxième pompe à eau (132), une batterie d'alimentation (133) et une deuxième vanne d'eau (134) en communication à tour de rôle, et la deuxième vanne d'eau (134) est en communication avec l'échangeur de chaleur (131), **caractérisé en ce que** le système de gestion thermique d'automobile (1) comprend en outre
une première boucle de chauffage de batterie (15), qui est configurée pour utiliser la source de chaleur fournie par le réchauffeur (121) et effectuer un échange de chaleur entre l'eau au moyen de l'échangeur de chaleur (131), pour chauffer la batterie d'alimentation (133) dans la boucle de batterie (13);
une deuxième boucle de chauffage de batterie (16), qui est configurée pour utiliser la source de chaleur générée par un moteur d'entraînement (142) dans le système de gestion thermique automobile (1) et effectuer un échange de chaleur entre l'eau au moyen de l'échangeur de chaleur (131), pour chauffer la batterie d'alimentation (133) dans la boucle de batterie (13);
une première boucle de refroidissement de batterie (17), qui est configurée pour refroidir la batterie d'alimentation (133) dans la boucle de batterie (13) lorsque la température de l'eau à l'entrée de la batterie d'alimentation (133) est détectée comme étant inférieure ou égale au seuil de température prédéterminé ;
une deuxième boucle de refroidissement de batterie (18), qui est configurée pour utiliser, lorsque la température de l'eau à l'entrée de la batterie d'alimentation (133) est détectée comme étant supérieure au seuil de température prédéterminé, un agent de condensation fourni par le condenseur (112) dans la boucle de refroidissement d'habitacle (11) pour effectuer un échange thermique entre l'eau et l'agent de condensation au moyen de l'échangeur de chaleur (131) en communication avec la boucle de refroidissement d'habitacle (11) et partagé avec les boucles de batterie (13), de manière à refroidir la batterie d'alimentation (133) dans la boucle de batterie (13);
dans lequel la première boucle de chauffage de batterie (15) comprend une quatrième vanne d'eau (151), le réchauffeur (121), la première pompe à eau (122), la première vanne d'eau (123) et l'échangeur de chaleur (131) qui sont en communication à tour de rôle, le réchauffeur (121), la première pompe à eau (122) et la première vanne d'eau (123) étant partagés avec la boucle de chauffage d'habitacle (12), et l'échangeur de chaleur (131) étant partagé avec la boucle de batterie (13), et l'échangeur de chaleur (131) est en communication avec la quatrième vanne d'eau (151) ;
dans lequel selon le besoin de chauffer l'habitacle par la boucle de chauffage d'habitacle (12), la première vanne d'eau (123) dirige un flux d'eau vers l'ensemble de chauffage et de ventilation et de climatisation (113), pour effectuer un échange de vent et de chaleur entre la source de chaleur générée par le réchauffeur (121) et le noyau de vent chaud dans l'ensemble de chauffage et de ventilation et de climatisation (113) ;
selon le besoin de chauffer la batterie d'alimentation (133) par la première boucle de chauffage de batterie (15), la quatrième vanne d'eau (151) guide le flux d'eau vers le réchauffeur (121) partagé avec la boucle de chauffage d'habitacle (12), et la première vanne d'eau (123) guide le flux d'eau vers l'échangeur de chaleur (131), pour chauffer la batterie d'alimentation (133) via l'échangeur de chaleur (131) partagé avec la boucle de batterie (13).

2. Système de gestion thermique d'automobile (1) selon la revendication 1, **caractérisé en ce que** le système de gestion thermique automobile (1) comprend en outre une boucle de dissipation thermique de moteur (14) ;
la boucle de dissipation thermique de moteur (14) est configurée pour refroidir le moteur d'entraînement (142) à l'intérieur du système de gestion thermique automobile (1) ; la boucle de dissipation thermique du moteur (14) comprend un microcontrôleur (141), le moteur d'entraînement (142), une troisième pompe à eau (143), une troisième vanne d'eau (144), un premier vase d'expansion (145), un radiateur de moteur (146), un capteur de température d'eau (147) et un chargeur embarqué (148) communiquant à tour de rôle,
et le chargeur embarqué (148) est en communication avec le microcontrôleur (141) ; lorsque le capteur de température d'eau (147) détecte que la température de la chaleur générée par le moteur d'entraînement (142) dépasse un seuil de température de moteur prédéterminé, le microcontrôleur (141) commande la troisième vanne d'eau (144) pour guider le flux d'eau vers le premier vase d'expansion (145), pour évacuer la chaleurgénérée par le moteur d'entraînement (142) via le premier vase d'expansion (145) et le radiateur de moteur (146).

3. Système de gestion thermique d'automobile (1) selon la revendication 2, **caractérisé en ce que** : la deuxième boucle de chauffage de batterie (16) comprend l'échangeur de chaleur (131) partagé avec la boucle de batterie (13), une quatrième vanne d'eau (151), le chargeur embarqué (148), le microcontrôleur (141), le moteur d'entraînement (142), la troisième pompe à eau (143) et la troisième vanne d'eau (144) partagées avec la boucle de dissipation thermique du moteur (14) en communication à tour de rôle; la troisième vanne d'eau (144) est en communication avec l'échangeur de chaleur (131) ;
selon le besoin de chauffer la batterie d'alimentation (133) par la deuxième boucle de chauffage de batterie (16), la troisième vanne d'eau (144) guide le flux d'eau vers l'échangeur de chaleur (131), et la chaleur générée par le moteur d'entraînement (142) traverse l'échangeur de chaleur (131) partagé avec la boucle de batterie (13) pour effectuer un échange de chaleur entre l'eau, pour chauffer la batterie d'alimentation (133) dans la boucle de batterie (13).

4. Système de gestion thermique d'automobile (1) selon la revendication 1, **caractérisé en ce que** la première boucle de refroidissement de batterie (13) comprend la deuxième pompe à eau (132), la batterie d'alimentation (133) et la deuxième vanne d'eau (134) partagée avec une boucle de batterie (13), un deuxième vase d'expansion (171) et un radiateur de batterie (172) en communication à tour de rôle; le radiateur de batterie (172) est en communication avec la deuxième pompe à eau (132) ;
lorsque le capteur de température prévu sur la batterie d'alimentation (133) détecte que la température de l'eau à l'entrée de la batterie d'alimentation (133) est inférieure ou égale au seuil de température prédéterminé, le contrôleur du système de gestion thermique automobile (1) régule le fonctionnement de la deuxième vanne d'eau (134) pour guider le flux d'eau vers le deuxième vase d'expansion (171), et la chaleur dissipée par la batterie d'alimentation (133) sera évacuée à travers la plaque de refroidissement de la batterie d'alimentation (133), la deuxième pompe à eau (132) et le radiateur de batterie (172).

5. Système de gestion thermique d'automobile (1) selon la revendication 1, **caractérisé en ce que** la deuxième boucle de refroidissement de batterie (18) est une boucle formée en mettant en communication la boucle de refroidissement d'habitacle (11) avec la boucle de batterie (13) ; lorsque le capteur de température prévu sur la batterie d'alimentation (133) détecte que la température de l'eau à l'entrée de la batterie d'alimentation (133) est supérieure au seuil de température prédéterminé, le contrôleur du système de gestion thermique automobile (1) régule le fonctionnement de la deuxième vanne d'eau (134) pour guider le flux d'eau vers l'échangeur de chaleur (131) en communication avec la boucle de refroidissement de l'habitacle (11), et simultanément le contrôleur met en marche le compresseur électrique (111) de la boucle de refroidissement d'habitacle (11) pour effectuer un échange de chaleur entre l'agent de condensation et l'eau via l'échangeur de chaleur (131) par l'agent de condensation fourni par le condenseur (112), de manière à évacuer la chaleur dissipée par la batterie d'alimentation (133).

6. Système de gestion thermique d'automobile (1) selon la revendication 1, **caractérisé en ce qu'**un échangeur de chaleur intégré à trois voies est utilisé comme échangeur de chaleur (131).

7. Système de gestion thermique d'automobile (1) selon la revendication 1, **caractérisé en ce qu'**un radiateur électrique en céramique est utilisé comme radiateur (121).

8. Automobile, **caractérisée en ce qu'**elle comprend un système de gestion thermique d'automobile (1) selon une quelconque des revendications 1 à 7.
